# EUROPÄISCHE PATENTSCHRIFT

(11) **EP 3 069 643 B1**
(45) Veröffentlichungstag und Bekanntmachung des Hinweises auf die Patenterteilung: **28.04.2021**
(21) Anmeldenummer: 15159778.8
(22) Anmeldetag: 19.03.2015
(51) Int. Cl.: A47J 43/07, A47J 27/00, A47J 36/32

(54) **VERFAHREN ZUM BETRIEB EINER ELEKTROMOTORISCH ANGETRIEBENEN KÜCHENMASCHINE**
METHOD FOR OPERATING AN ELECTRIC MOTORISED KITCHEN APPLIANCE
PROCÉDÉ DE FONCTIONNEMENT D'UN ROBOT MÉNAGER À MOTEUR ÉLECTRIQUE

(43) Veröffentlichungstag der Anmeldung: 21.09.2016
(73) Patentinhaber: Vorwerk & Co. Interholding GmbH, 42275 Wuppertal (DE)
(72) Erfinder: Sauerwald, Andres, 46238 Bottrop (DE); Wehlig, Ramona, 8810 Horgen (CH); Hilgers, Stefan, 45357 Essen (DE)
(74) Vertreter: Müller, Enno

(56) Entgegenhaltungen:
- EP-A2- 2 574 261
- WO-A1-2014/083022
- WO-A1-2014/083029
- DE-U1-202014 004 271
- FR-A1- 2 804 519

## Beschreibung

Die Erfindung betrifft ein Verfahren zum Betrieb einer elektromotorisch angetriebenen Küchenmaschine zum Zubereiten eines Zubereitungsgutes anhand eines Rezeptes, wobei das Zubereitungsgut in einem Gefäß der Küchenmaschine durch einen oder mehrere aufeinanderfolgende Zubereitungsschritte, insbesondere Rühren und/oder Erwärmen und/oder Zerkleinern, zubereitet wird.

Elektromotorisch angetriebene Küchenmaschinen im Sinne der Erfindung sind alle halbautomatisch oder vollautomatisch betriebenen Küchenmaschinen, wie beispielsweise Kochmixgeräte, mit deren Hilfe ein Nutzer vorteilhaft mehrere Zubereitungsschritte eines Rezeptes durchführen kann. Diese Küchenmaschinen verfügen zumeist über ein Gefäß, welchem eine Heizeinrichtung und ein Rührwerk zugeordnet sind, so dass ein in dem Gefäß vorhandenes Zubereitungsgut geheizt und/oder gerührt werden kann. Zudem kann es auch vorgesehen sein, das Zubereitungsgut zu zerkleinern, zu kneten oder ähnliches.

Im Stand der Technik ist es darüber hinaus bekannt, dass der Nutzer der Küchenmaschine ein Rezept aus einer Datenbank wählt, die eine Vielzahl von verfügbaren Rezepten enthält. Dabei kann der Nutzer entsprechend seiner persönlichen geschmacklichen Vorlieben, beispielsweise vegetarische Rezepte, fettarme Rezepte oder ähnliches wählen.

Aus der WO 2014/083022 A1 ist es bekannt, Parameter der Küchenmaschine durch Gesten des Benutzers einzustellen. Hierbei kann auch eine Aneinanderreihung unterschiedlicher Gesten eine Abfolge von Funktionen der Küchenmaschine ausführen lassen. Weiter ist es aus der WO 2014/ 083029 A1 bekannt, in Abhängigkeit von einer Erkennung eines Benutzers spezifizierte Rezeptvorschläge aus der Rezeptdatenbank zu machen. Aus der DE 20 2014 004271 U1 sind die Steuerung einer Küchenmaschine und die Auswahl von Rezepten durch einen Benutzer bekannt.

Ausgehend von diesem Stand der Technik ist es wünschenswert, die Unterstützung des Nutzers der Küchenmaschine bei der Zubereitung eines Zubereitungsgutes weiter zu verbessern. Insbesondere ist es gewünscht, das Verhalten der Küchenmaschine individuell auf den Nutzer und dessen persönliche Vorlieben anzupassen.

Zur Fortbildung des Verfahrens zum Betrieb einer elektromotorisch angetriebenen Küchenmaschine wird daher vorgeschlagen, dass ein Betriebsparameter der Küchenmaschine automatisch in Abhängigkeit von einem wiederholten gleichartigen Anwenderverhalten bei der Abarbeitung eines Rezeptes gesteuert wird, wobei das Anwenderverhalten einen Austausch von für ein Rezept vorgesehenen Zutaten durch andere Zutaten und/oder eine von einem Rezept abweichende Menge einer Zutat beinhaltet, wobei das Anwenderverhalten eine Vielzahl von Daten umfasst, wobei die Daten innerhalb eines Datenspeichers hinterlegt werden, wobei eine Auswerte- und Steuereinrichtung der Küchenmaschine die Vielzahl von in dem Datenspeicher gespeicherten Daten auswertet, dabei Wiederholungen des Anwenderverhaltens erkennt und die aktuellen Betriebsparameter der Küchenmaschine analog zu den Betriebsparametern der früheren Zubereitungen steuert.

Erfindungsgemäß ist vorgesehen, dass der Betrieb der Küchenmaschine, insbesondere die Betriebsparameter der Küchenmaschine, automatisch in Abhängigkeit von einem persönlichen Anwenderverhalten eines Nutzers gesteuert wird. Dafür wird das Verhalten des Nutzers der Küchenmaschine vorzugsweise innerhalb eines Speichers der Küchenmaschine, alternativ jedoch auch innerhalb eines zentralen Servers eines Netzwerks, gespeichert und in Bezug auf wiederkehrende Verhaltensmuster ausgewertet. Beispielsweise kann das Anwenderverhalten eine zeitlich wiederkehrende Auswahl und Abarbeitung eines Rezeptes aus einer Vielzahl von Rezepten beinhalten, so dass ein persönliches Profil des Nutzers in der Küchenmaschine oder dem Netzwerk angelegt werden kann. Auf dieses persönliche Profil wird dann zurückgegriffen, um Betriebsparameter der Küchenmaschine so zu steuern, dass diese den Wünschen des Nutzers in besonderem Maße gerecht werden. Darüber hinaus kann zusätzlich eine Anwesenheit des Nutzers im Bereich der Küchenmaschine als Umgebungsparameter herangezogen werden, mit welcher der Betrieb der Küchenmaschine gesteuert wird. Beispielsweise kann die Küchenmaschine bei Anwesenheit des Nutzers direkt mit diesem kommunizieren, während dies bei Nichtanwesenheit des Nutzers in dieser Form nicht möglich.

Sofern die nachfolgende Beschreibung das Merkmal enthält, dass das Anwenderverhalten eine persönliche Auswahl oder Vermeidung einer Gruppe von Rezepten aufgrund bestimmter dafür vorgesehener Zutaten beinhaltet, wird darauf hingewiesen, dass es sich bei den Ausführungsbeispielen mit diesem Merkmal nicht um einen Teil der Erfindung handelt.

Zusätzlich können die Betriebsparameter der Küchenmaschine auch in Abhängigkeit von Umgebungsparametern während der Abarbeitung des Rezeptes gesteuert werden. In dem Sinne kann der Betrieb der Küchenmaschine nicht nur in Abhängigkeit von einem persönlichen Verhalten des Nutzers und/oder einer Anwesenheit des Nutzers gesteuert werden, sondern vielmehr auch von objektiven Umgebungsbedingungen in der Nähe der Küchenmaschine, wie Umgebungstemperatur, Druck, Luftfeuchte und ähnliches. Die Umgebungstemperatur ist dabei insbesondere bei der Zubereitung von temperaturempfindlichem Zubereitungsgut von Interesse. Dieses Zubereitungsgut kann beispielsweise Hefe, Sahne oder ähnliches sein. Ein Temperatursensor der Küchenmaschine oder auch ein externer Temperatursensor, welcher mit der Küchenmaschine in Kommunikationsverbindung steht, kann eine Temperatur in der unmittelbaren Umgebung der Küchenmaschine messen und einen Betriebsparameter der Küchenmaschine so steuern, dass die Zubereitung des Zubereitungsgutes gelingt. Der gesteuerte Betriebsparameter der Küchenmaschine kann beispielsweise eine aktuelle Temperatur der Heizeinrichtung der Küchenmaschine sein.

Es wird vorgeschlagen, dass das Anwenderverhalten einen Austausch von für ein Rezept vorgesehenen Zutaten durch andere Zutaten und/oder eine von einem Rezept abweichende Menge einer Zutat beinhaltet. Die Küchenmaschine registriert dabei das Anwenderverhalten aufgrund der wiederholten Abweichungen von Rezeptvorgaben, Favoritenlisten, oder einer persönlichen, grundsätzlichen Zutatensubstitution, beispielsweise Ersetzen von üblichem Haushaltszucker durch Honig. Eine persönliche Rezeptauswahl kann beispielsweise eine bevorzugte Auswahl vegetarischer Gerichte, fettarmer Gerichte oder ähnliches sein. Die Küchenmaschine erkennt dabei anhand einer Speicherung und Auswertung der früheren von einem Nutzer ausgewählten Rezepte wiederkehrende Zutaten beziehungsweise niemals bei einer Zubereitung verwendete Zutaten und schließt daraus auf bestimmte Vorlieben beziehungsweise Abneigungen des Nutzers. Darüber hinaus kann die Auswerteeinrichtung der Küchenmaschine auch einen wiederkehrenden Austausch bestimmter Zutaten durch andere Zutaten erkennen und in dem Nutzerprofil einen entsprechenden Vermerk hinterlegen, dass eine bestimmte Zutat stets durch eine andere Zutat ersetzt werden soll. Sofern der Nutzer dann ein Rezept mit der nicht gewünschten Zutat auswählt, wird das Rezept automatisch so geändert, dass diese Zutat entsprechend des gespeicherten Nutzerprofils ausgetauscht wird. Darüber hinaus kann in dem Nutzerprofil auch hinterlegt sein, dass eine bestimmte Zutat nur in einer geringeren als in dem Rezept angegebenen Menge bei der Zubereitung des Zubereitungsgutes verwendet wird. Beispielsweise stellt die Küchenmaschine fest, dass ein bestimmter Nutzer stets eine geringere Menge Fett oder Öl für eine Zubereitung verwendet als nach dem Rezept vorgesehen ist. Dieses Anwenderverhalten wird in dem Nutzerprofil gespeichert und bei entsprechenden späteren Zubereitungen derart berücksichtigt, dass die in dem Rezept angegebene Fettmenge um einen gewissen Anteil, beispielsweise einen bestimmten Prozentsatz, reduziert wird. Mit Hilfe des erfindungsgemäßen Verfahrens lässt sich somit ein komplexes, individuelles Nutzerprofil anlegen, welches innerhalb der Küchenmaschine oder auch einem zentralen Datenspeicher eines Netzwerks, gespeichert wird. Dieses Nutzerprofil dient einer automatischen Anpassung von Rezepten nach den individuellen Vorlieben des Nutzers, so dass der Nutzer bei einer Zubereitung nicht mehr aktiv auf eine entsprechende Änderung des Rezeptes achten und einwirken muss, sondern die dafür benötigten Maßnahmen automatisch von der Küchenmaschine vorgenommen werden.

Des Weiteren wird vorgeschlagen, dass das Anwenderverhalten einen für die Abarbeitung eines Rezeptes genutzten Wochentag, eine für die Abarbeitung eines Rezeptes genutzte Tageszeit und/oder Uhrzeit, eine Einbindung eines Rezeptes in ein Menü und/oder eine Wiederholfrequenz der Nutzung der Küchenmaschine oder der Abarbeitung eines bestimmten Rezeptes oder einer bestimmten Gruppe von Rezepten beinhaltet. Eine von dem Nutzer der Küchenmaschine getätigte Auswahl eines Rezeptes wird von der Küchenmaschine gespeichert und einem bestimmten Wochentag, einer Tageszeit und/oder einer Uhrzeit zugeordnet. So kann das Nutzerprofil beispielsweise um Informationen über bevorzugte Gerichte an bestimmten Tagen, zu bestimmten Tageszeiten und/oder Uhrzeiten ergänzt werden. Beispielsweise kann das Nutzerprofil eine Information darüber enthalten, dass der Nutzer üblicherweise an den Arbeitstagen Montag bis Freitag in den Abendstunden ein warmes Gericht zubereitet, während er die warme Mahlzeit an den Wochenenden Mittags bevorzugt. Dadurch ist es möglich, dem Nutzer an entsprechenden Wochentagen andere Rezepte, beispielsweise eher kalte Gerichte oder warme Gerichte, zur Zubereitung vorzuschlagen. Darüber hinaus existieren auch Gerichte, welche sowohl kalt als auch warm verzehrt werden können. Zu denken ist hier beispielsweise an kalten oder warmen Milchreis. Sofern das Anwenderverhalten einen Rückschluss darauf zulässt, dass eine der Varianten zu bestimmten Zeiten bevorzugt wird, kann dies in dem Nutzerprofil hinterlegt und für spätere Zubereitungen automatisch berücksichtigt werden. Ein im Sinne der Erfindung wiederholtes gleichartiges Anwenderverhalten kann auch darin bestehen, dass ein bestimmter Nutzer nicht nur einzelne Gerichte zubereitet, sondern diese vielmehr in ein komplettes Menü einbindet, so dass die Küchenmaschine gegebenenfalls eine gleichzeitige Abarbeitung mehrerer Rezepte berücksichtigt oder dem Nutzer Menüvorschläge unterbreitet. Darüber hinaus kann aus dem Anwenderverhalten auch eine Wiederholfrequenz der Nutzung der Küchenmaschine bestimmt und gespeichert werden, so dass die Küchenmaschine zu entsprechenden Zeiten, in welchen nach der Zubereitungshistorie eine Nutzung der Küchenmaschine zu erwarten ist, ein Standby-Modus geschaltet wird, eine Heizeinrichtung vorgeheizt wird oder ähnliches.

Es wird vorgeschlagen, dass der abhängig von einem wiederholten gleichartigen Anwenderverhalten gesteuerte Betriebsparameter ein Wartungsintervall der Küchenmaschine ist. Nach Auswertung der Betriebsstunden der Küchenmaschine, gegebenenfalls sortiert nach der Art der Zubereitung, kann aus den gespeicherten Daten die insbesondere technische Beanspruchung der Küchenmaschine erkannt und entsprechende Wartungsintervalle hochgerechnet werden. Sofern das Anwenderverhalten beispielsweise erkennen lässt, dass der Nutzer der Küchenmaschine das Rührwerk häufig bei sehr hohen Drehzahlen belastet, kann ein entsprechend früheres Wartungsintervall für das Rührwerk vorgesehen sein. Das Nutzerprofil gibt somit auch eine Auskunft darüber, wie die Funktionstüchtigkeit der Küchenmaschine optimal gewährleistet werden kann.

Es kann darüber hinaus vorgesehen sein, dass der gesteuerte Betriebsparameter der Küchenmaschine eine Drehzahl eines Rührwerkes der Küchenmaschine und/oder eine Temperatur einer Heizeinrichtung der Küchenmaschine ist. Die Betriebsparameter Rührwerkdrehzahl beziehungsweise Heizeinrichtungstemperatur können dabei vorteilhaft in Abhängigkeit von der Anwesenheit eines Nutzers in der näheren Umgebung der Küchenmaschine, beispielsweise in demselben Raum, gesteuert werden. Die Drehzahl des Rührwerks als gesteuerter Betriebsparameter kann davon abhängig sein, ob der Nutzer der Küchenmaschine in der Nähe der Küchenmaschine anwesend ist, um die Zubereitung zu begleiten und eventuell manuell einzugreifen, um eine sichere und optimale Zubereitung des Zubereitungsgutes zu gewährleisten. Zusätzlich kann es bei der Zubereitung von Zubereitungsgütern, welche empfindlich auf Veränderungen der Umgebungstemperatur reagieren, erforderlich sein, die Heizeinrichtung der Küchenmaschine so zu steuern, dass die schwankende Umgebungstemperatur keinen Einfluss auf das Gelingen der Zubereitung hat.

Insbesondere kann vorgesehen sein, dass der gesteuerte Betriebsparameter einen Sicherheitsmodus und/oder einen Normalmodus der Küchenmaschine beinhaltet. Der Sicherheitsmodus kann dabei für den Fall vorgesehen sein, dass der Nutzer nicht in der Nähe der Küchenmaschine anwesend ist. Der Normalmodus der Küchenmaschine kann im Falle der Anwesenheit des Nutzers vorgesehen sein. Der Sicherheitsmodus unterscheidet sich beispielsweise dadurch von dem Normalmodus, dass eine höhere Drehzahl des Rührwerkes möglich ist. Beispielsweise kann es passieren, dass die Küchenmaschine bei hohen Drehzahlen und nicht gleichmäßiger Gewichtsbelastung des Gefäßes übermäßig in Schwingung versetzt wird. Wenn die Küchenmaschine nun zuvor mittels eines Sensors detektiert hat, dass sich der Nutzer in der Nähe der Küchenmaschine aufhält, kann lediglich ein Warnton zur Information des Nutzers über die Gefahr ausgegeben werden, während bei Nichtanwesenheit des Nutzers ein Sicherheitsmodus vorgesehen ist derart, dass die Küchenmaschine entweder abgeschaltet wird oder das Rührwerk mit einer geringeren Drehzahl, welche nicht zu übermäßigen Schwingungen der Küchenmaschine führt, betrieben wird. Die Anwesenheit des Nutzers im Bereich der Küchenmaschine kann beispielsweise mittels eines optischen Sensors, einer Kamera, eines Temperatursensors oder eines Bewegungssensors festgestellt werden.

In dem Sinne wird vorgeschlagen, dass der Sicherheitsmodus eine Reduzierung einer bei einer Abarbeitung eines Rezeptes angewendeten Drehzahl eines Rührwerkes oder einer Temperatur einer Heizeinrichtung der Küchenmaschine gegenüber dem Normalmodus oder eine Abschaltung des Rührwerks oder der Heizeinrichtung der Küchenmaschine beinhaltet. Die Auswahl zwischen dem Sicherheitsmodus und dem Normalmodus kann in Abhängigkeit von einer Anwesenheit eines Nutzers im Bereich der Küchenmaschine gesteuert werden, wobei die Küchenmaschine im Normalmodus betrieben wird, wenn der Nutzer anwesend ist, und wobei die Küchenmaschine im Sicherheitsmodus betrieben wird, wenn der Nutzer nicht anwesend ist.

Schließlich kann vorgesehen sein, dass die Küchenmaschine erst dann im Sicherheitsmodus betrieben wird, wenn der Nutzer innerhalb einer bestimmten Zeitspanne nicht auf die Küchenmaschine eingewirkt hat, wobei eine Nachricht über den bevorstehenden Betrieb der Küchenmaschine im Sicherheitsmodus auf ein Datenkommunikationsgerät des Nutzers gesendet wird. Sofern sich der Nutzer der Küchenmaschine somit nicht in der Nähe der Küchenmaschine aufhält, wird der Nutzer durch eine Nachricht auf ein Datenkommunikationsgerät, beispielsweise ein Mobiltelefon, darüber informiert, dass die Küchenmaschine in Kürze abgeschaltet oder das Rührwerk der Küchenmaschine mit einer geringeren als nach dem Rezept vorgesehenen Drehzahl betrieben wird, sofern der Nutzer nicht innerhalb einer bestimmten, mitgeteilten Zeitspanne auf die Küchenmaschine einwirkt. Dieses Einwirken kann beispielsweise darin bestehen, dass der Nutzer das in dem Gefäß enthaltene Zubereitungsgut umverteilt, die Füllmenge reduziert oder ähnliches.

Schließlich betrifft die Erfindung auch eine elektromotorisch betriebene Küchenmaschine zum Zubereiten eines Zubereitungsgutes anhand eines Rezeptes, insbesondere zum Zubereiten nach einem zuvor erläuterten erfindungsgemäßen Verfahren, wobei die Küchenmaschine einen Datenspeicher, eine Auswerte- und Steuereinrichtung und ein aufheizbares, zur Aufnahme eines Rührwerkes ausgebildetes Gefäß aufweist und ausgebildet ist, einen Betriebsparameterautomatisch in Abhängigkeit von einem in dem Datenspeicher gespeicherten wiederholten gleichartigen Anwenderverhalten bei der Abarbeitung eines Rezeptes zu steuern, wobei das Anwenderverhalten einen Austausch von für ein Rezept vorgesehenen Zutaten durch andere Zutaten und/oder eine von einem Rezept abweichende Menge einer Zutat beinhaltet, wobei das Anwenderverhalten eine Vielzahl von Daten umfasst, wobei die Daten innerhalb des Datenspeichers hinterlegt sind, wobei die Auswerte- und Steuereinrichtung der Küchenmaschine eingerichtet ist, die Vielzahl von in dem Datenspeicher gespeicherten Daten auszuwerten, dabei Wiederholungen des Anwenderverhaltens zu erkennen und die aktuellen Betriebsparameter der Küchenmaschine analog zu den Betriebsparametern der früheren Zubereitungen zu steuern. Die erfindungsgemäße Küchenmaschine weist somit einen Datenspeicher auf oder steht in Datenverbindung mit einem externen Datenspeicher, in welchem das Anwenderverhalten gespeichert wird. Das Anwenderverhalten umfasst dabei eine Vielzahl von Daten wie einen Austausch von für ein Rezept vorgesehenen Zutaten durch andere Zutaten, eine von einem Rezept abweichende Menge einer Zutat, einen für die Abarbeitung eines Rezeptes genutzten Wochentag, eine für die Abarbeitung eines Rezeptes genutzte Tageszeit und/oder Uhrzeit, eine Einbindung eines Rezeptes in ein Menü und/oder eine Wiederholfrequenz der Nutzung der Küchenmaschine oder der Abarbeitung eines bestimmten Rezeptes oder einer bestimmten Gruppe von Rezepten. Aus diesen Daten wird eine Tabelle innerhalb des Datenspeichers hinterlegt, auf welche die Küchenmaschine bei späteren Zubereitungen zugreifen kann. Darüber hinaus weist die Küchenmaschine einen Sensor zur Detektion der Anwesenheit eines Nutzers auf. Dieser Sensor kann beispielsweise ein optischer oder akustischer Sensor sein, dessen Detektionsbereich die nähere Umgebung der Küchenmaschine, insbesondere den Raum, in welchem die Küchenmaschine steht, abdeckt. Eine Auswerte- und Steuereinrichtung der Küchenmaschine wertet diese Vielzahl von in der Tabelle gespeicherten Daten aus, erkennt dabei Wiederholungen des Anwenderverhaltens und steuert die aktuellen Betriebsparameter der Küchenmaschine analog zu den Betriebsparameters der früheren Zubereitungen. Im Übrigen gelten die in Bezug auf das erfindungsgemäße Verfahren gemachten Ausführungen.

Im Folgenden wird die Erfindung anhand eines Ausführungsbeispiels näher erläutert. Es zeigen:
- Fig. 1: ein erfindungsgemäßes Verfahren in Abhängigkeit von einem Anwenderverhalten eines ersten Nutzers,
- Fig. 2: ein erfindungsgemäßes Verfahren in Abhängigkeit von einem Anwenderverhalten eines zweiten Nutzers,
- Fig. 3: ein gespeichertes Nutzerprofil aufgrund des bisherigen Anwenderverhaltens des Nutzers.

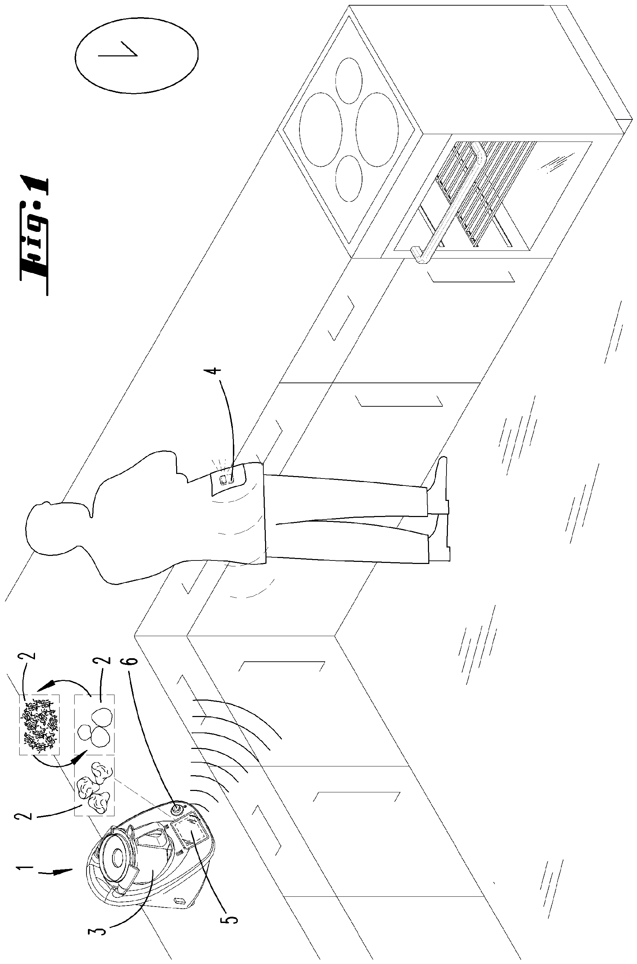

Figur 1 zeigt eine erste Küchensituation, in welcher ein Nutzer einer Küchenmaschine 1 ein Zubereitungsgut 2, welches mehrere Zutaten aufweist, zubereitet.

Die Küchenmaschine 1 weist ein Gefäß 3 auf sowie eine dem Gefäß 3 zugeordnete Heizeinrichtung. Zudem weist die Küchenmaschine 1 ein Rührwerk auf, dessen als Messersatz ausgebildeter Endbereich innerhalb des Gefäßes 3 angeordnet ist. Zudem verfügt die Küchenmaschine 1 in üblicher Weise über ein Display 5 zur Anzeige eines Auswahlmenüs oder zur Eingabe von Befehlen durch den Nutzer. Des Weiteren ist ein Schalter 6 zum Ein- und Ausschalten der Küchenmaschine 1 vorgesehen. Der Nutzer verfügt über ein Datenkommunikationsgerät 4, hier ein Mobiltelefon, welches in Kommunikationsverbindung mit der Küchenmaschine 1 steht.

Die Erfindung funktioniert nun so, dass der Nutzer der Küchenmaschine 1 in einem Datenspeicher der Küchenmaschine 1 ein Rezept auswählt, mit welchem er ein Zubereitungsgut 2 zubereiten möchte. Hierzu wählt er über das Display 5 ein Rezept aus einer Datenbank aus. Die Küchenmaschine 1 zeigt das ausgewählte Rezept mit den darin enthaltenen Zutaten auf dem Display 5 an. Die Zutaten des Zubereitungsgutes 2 enthalten nach dem Rezept beispielsweise Kartoffeln und Blumenkohl. Der Nutzer wandelt dieses Rezept nun so ab, dass anstatt Kartoffeln Reis verwendet wird. Im Übrigen soll das Rezept, wie im Datenspeicher der Küchenmaschine 1 hinterlegt, bestehen bleiben. Im Verlauf der Zubereitung des Zubereitungsgutes 2 verändert die Küchenmaschine 1 die Betriebsparameter so, dass diese für die Zubereitung von Reis geeignet sind.

Hierzu werden die Heizeinrichtung und das Rührwerk der Küchenmaschine 1 so gesteuert, dass der die Kartoffeln ersetzende Reis optimal gegart wird.

Sofern der Nutzer nun wiederholt bei diesem oder auch anderen Rezepten Kartoffeln durch Reis ersetzt, erkennt eine Auswerte- und Steuereinrichtung der Küchenmaschine 1, dass der Nutzer grundsätzlich den Austausch von Kartoffeln durch Reis wünscht. Dies wird innerhalb des Datenspeichers der Küchenmaschine 1 hinterlegt, so dass die Betriebsparameter der Küchenmaschine 1, d.h. hier beispielsweise die Drehzahl des Rührwerks und die Temperatur der Heizeinrichtung, bei der Abarbeitung des Rezeptes so gesteuert werden, dass die Zubereitung des veränderten Zubereitungsgutes 2 gelingt. Ggf. kann auch berücksichtigt werden, dass der Nutzer wiederholt in gleicher Art und Weise eine bestimmte Menge Reis für ein Rezept verwenden möchte. Hierzu kann eine Wägeeinrichtung der Küchenmaschine 1 messen, welche Menge Reis der Nutzer in das Gefäß 3 gibt. Diese Menge wird innerhalb des Datenspeichers der Küchenmaschine 1 hinterlegt, so dass bei künftigen Zubereitungen diese Menge Reis berücksichtigt wird.

Darüber hinaus speichert die Küchenmaschine 1 die für die Abarbeitung eines Rezeptes genutzte Uhrzeit sowie den Wochentag. In dem gezeigten Beispiel speichert die Küchenmaschine 1, dass der Nutzer das entsprechende Rezept an einem Samstag um 14:00 Uhr abarbeitet. Sofern der Nutzer später, beispielsweise in der darauffolgenden Woche, an einem Samstag um 14:00 Uhr, oder um die Mittagszeit, den Schalter 6 oder das Display 5 der Küchenmaschine 1 betätigt, ruft die Küchenmaschine 1 die aktuelle Uhrzeit ab und prüft die in dem Datenspeicher für diese Uhrzeit und gegebenenfalls diesen Nutzer hinterlegten Daten, d.h. Rezepte, welche der Nutzer an einem ebensolchen Wochentag um ungefähr diese Uhrzeit abgearbeitet hat.

Damit die Küchenmaschine 1 den Nutzer erkennen kann, trägt dieser das Datenkommunikationsgerät 4, hier sein Mobiltelefon, mit sich. Die Küchenmaschine 1 verfügt über ein Funkmodul, welches elektromagnetische Wellen an das Datenkommunikationsgerät 4 aussendet. Das Datenkommunikationsgerät 4 empfängt dieses Signal und sendet ein Antwortsignal, welches eine Information über die Person des Nutzers beinhaltet. Die Küchenmaschine 1 empfängt dieses Antwortsignal und greift auf diejenigen Rezepte innerhalb seines Datenspeichers zu, welche von diesem Nutzer schon einmal abgearbeitet wurden. Im gezeigten Ausführungsbeispiel kann der Datenspeicher der Küchenmaschine 1 beispielsweise für jeden Nutzer der Küchenmaschine 1 eine eigene Tabelle enthalten, welche sortiert nach Wochentagen, Uhrzeit oder gegebenenfalls auch der aktuellen Außentemperatur in der Vergangenheit von dem Nutzer abgearbeitete Rezepte enthält. Sofern es sich beispielsweise um einen heißen Sommertag handelt, schlägt die Küchenmaschine 1 dem Nutzer andere Rezepte vor als an einem kalten Wintertag.

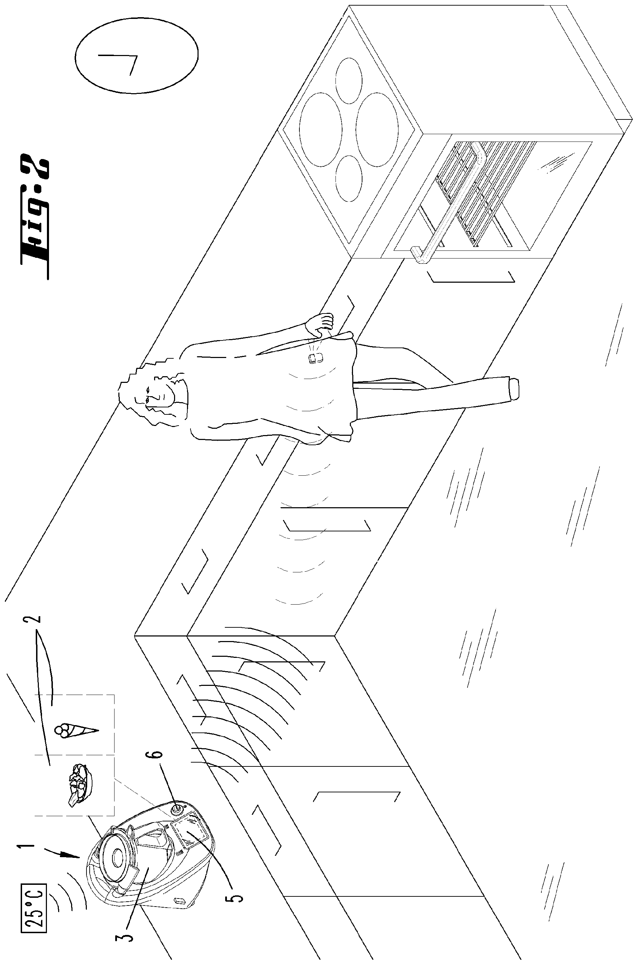

Figur 2 zeigt eine Situation, in welcher eine Nutzerin der Küchenmaschine 1 an einem sehr heißen Sommerabend, gegen 21:00 Uhr, ein Rezept abarbeiten möchte. Die Nutzerin trägt ein Datenkommunikationsgerät 4, welches sie gegenüber der Küchenmaschine 1 ausweist. Sobald die Nutzerin die Küchenmaschine 1 einschaltet oder in den Funkbereich der Küchenmaschine 1 gelangt, erkennt die Küchenmaschine 1 die Anwesenheit der Nutzerin anhand deren Datenkommunikationsgerät 4. Die Küchenmaschine 1 prüft in einem internen Kalender die aktuelle Uhrzeit und den Wochentag und fragt, beispielsweise mittels eines Netzwerkanschlusses, eine aktuelle Außentemperatur ab. Zu diesem Zweck kann die Küchenmaschine 1 beispielsweise kommunikationstechnisch mit einem Temperatursensor verbunden sein oder auf eine Datenbank zugreifen, welche aktuelle Temperaturen für die Region beinhaltet.

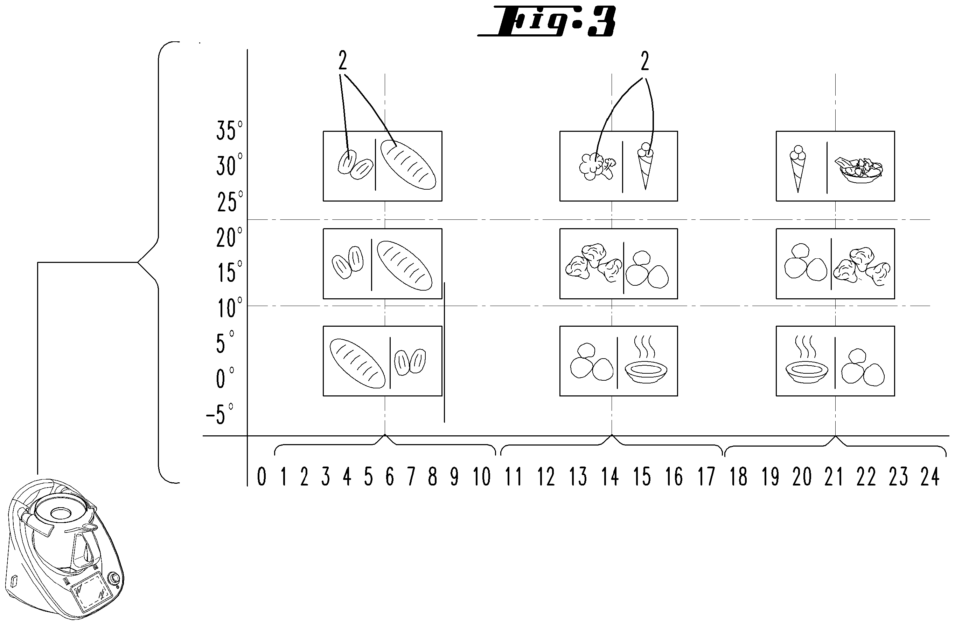

Wie in Figur 3 dargestellt, enthält der Datenspeicher der Küchenmaschine 1 eine Tabelle, welche anhand des bisherigen Anwenderverhaltens der Nutzerin erstellt wurde. Aus dem wiederholten gleichartigen Anwenderverhalten wurden für bestimmte Außentemperaturen und Tageszeiten Rezepte ermittelt und abgespeichert, welche die Nutzerin unter ähnlichen Bedingungen abgearbeitet hat. Für die aktuelle Außentemperatur von 25° und die aktuelle Uhrzeit, 21:00 Uhr, enthält das Nutzerprofil (Tabelle) den Hinweis, dass die Nutzerin einen Salat sowie als Nachspeise ein Eis zubereiten möchte. Die Küchenmaschine 1 ermittelt daraufhin aus der Rezeptdatenbank entsprechende Rezepte für Salat beziehungsweise Eis, zeigt diese auf dem Display 5 an und fordert die Nutzerin gegebenenfalls auf, ein entsprechendes Rezept auszuwählen und/oder zu bestätigen. Sodann wird die Zubereitung des Zubereitungsgutes 2 gestartet.

Darüber hinaus wird der Betrieb der Küchenmaschine 1 auch in Abhängigkeit davon gesteuert, ob sich der Nutzer oder die Nutzerin aktuell in der Nähe der Küchenmaschine 1 aufhält. Durch die Datenkommunikation mit dem Datenkommunikationsgerät 4 des Nutzers beziehungsweise der Nutzerin kann die Küchenmaschine 1 erkennen, ob sich der Nutzer beziehungsweise die Nutzerin in der unmittelbaren Nähe der Küchenmaschine 1 befindet und manuell auf die Zubereitung des Zubereitungsgutes 2 einwirken kann. Sofern der Nutzer/die Nutzerin beispielsweise nicht im Bereich der Küchenmaschine 1 anwesend ist, kann die Küchenmaschine 1 in einem Sicherheitsmodus betrieben werden, welcher nur eine bestimmte Maximaldrehzahl des Rührwerkes der Küchenmaschine 1 oder eine Maximaltemperatur der Heizeinrichtung der Küchenmaschine 1 zulässt. In kritischen Situationen, beispielsweise wenn die Küchenmaschine 1 durch eine ungleichmäßige Beladung des Gefäßes 3 mit Zubereitungsgut 2 in Schwingungen gerät, kann eine Abschaltung des Rührwerkes vorgesehen sein. In dem Fall kann der Nutzer/ die Nutzerin eine Nachricht auf das Datenkommunikationsgerät 4 gesendet bekommen, dass die Küchenmaschine 1 nun in einem Sicherheitsmodus betrieben und/oder abgeschaltet wird. Alternativ ist es auch möglich, dass die Küchenmaschine 1 vor dem Schalten eines Sicherheitsmodus eine bestimmte Zeitspanne abwartet, innerhalb welcher der Nutzer beziehungsweise die Nutzerin auf die Küchenmaschine 1 einwirken kann, beispielsweise nachdem dieser/ diese eine Nachricht über den bevorstehenden Sicherheitsmodus auf das Datenkommunikationsgerät 4 gesendet bekommen hat. In dem alternativen Fall, dass der Nutzer/ die Nutzerin in der Nähe der Küchenmaschine 1 anwesend ist, kann ein akustisches Signal, beispielsweise ein Piepton, auf einen erforderlichen manuellen Eingriff hinweisen.

Aufgrund der Nutzungshäufigkeit der Küchenmaschine 1 durch den oder die Nutzer kann schließlich ein Wartungsintervall berechnet werden, welches geeignet ist, die Küchenmaschine 1 optimal einsatzbereit zu halten.

## Patentansprüche

1. Verfahren zum Betrieb einer elektromotorisch angetriebenen Küchenmaschine (1) zum Zubereiten eines Zubereitungsgutes (2) anhand eines Rezeptes, wobei das Zubereitungsgut (2) in einem Gefäß (3) der Küchenmaschine (1) durch einen oder mehrere aufeinanderfolgende Zubereitungsschritte, insbesondere Rühren und/oder Erwärmen und/oder Zerkleinern, zubereitet wird, **dadurch gekennzeichnet, dass** ein Betriebsparameter der Küchenmaschine (1) automatisch in Abhängigkeit von einem wiederholten gleichartigen Anwenderverhalten bei der Abarbeitung eines Rezeptes gesteuert wird, wobei das Anwenderverhalten einen Austausch von für ein Rezept vorgesehenen Zutaten durch andere Zutaten und/oder eine von einem Rezept abweichende Menge einer Zutat beinhaltet, wobei das Anwenderverhalten eine Vielzahl von Daten umfasst, wobei die Daten innerhalb eines Datenspeichers hinterlegt werden, wobei eine Auswerte- und Steuereinrichtung der Küchenmaschine (1) die Vielzahl von in dem Datenspeicher gespeicherten Daten auswertet, dabei Wiederholungen des Anwenderverhaltens erkennt und die aktuellen Betriebsparameter der Küchenmaschine (1) analog zu den Betriebsparametern der früheren Zubereitungen steuert.

2. Verfahren nach Anspruch 1, **dadurch gekennzeichnet, dass** das Anwenderverhalten einen für die Abarbeitung eines Rezeptes genutzten Wochentag, eine für die Abarbeitung eines Rezeptes genutzte Tageszeit und/oder Uhrzeit, eine Einbindung eines Rezeptes in ein Menü und/oder eine Wiederholfrequenz der Nutzung der Küchenmaschine (1) oder der Abarbeitung eines bestimmten Rezeptes oder einer bestimmten Gruppe von Rezepten beinhaltet.

3. Verfahren nach einem der vorhergehenden Ansprüche, **dadurch gekennzeichnet, dass** der gesteuerte Betriebsparameter ein Wartungsintervall der Küchenmaschine (1) ist.

4. Verfahren nach einem der vorhergehenden Ansprüche, **dadurch gekennzeichnet, dass** der gesteuerte Betriebsparameter eine Drehzahl eines Rührwerkes der Küchenmaschine (1) und/oder eine Temperatur einer Heizeinrichtung der Küchenmaschine (1) ist.

5. Verfahren nach einem der vorhergehenden Ansprüche, **dadurch gekennzeichnet, dass** der gesteuerte Betriebsparameter einen Sicherheitsmodus und/oder einen Normalmodus der Küchenmaschine (1) beinhaltet.

6. Verfahren nach Anspruch 5, **dadurch gekennzeichnet, dass** der Sicherheitsmodus eine Reduzierung einer bei einer Abarbeitung eines Rezeptes angewendeten Drehzahl eines Rührwerkes oder einer Temperatur einer Heizeinrichtung der Küchenmaschine (1) gegenüber dem Normalmodus oder eine Abschaltung des Rührwerkes oder der Heizeinrichtung der Küchenmaschine (1) beinhaltet.

7. Verfahren nach Anspruch 5 oder 6, **dadurch gekennzeichnet, dass** die Auswahl zwischen dem Sicherheitsmodus und dem Normalmodus in Abhängigkeit von einer Anwesenheit eines Nutzers im Bereich der Küchenmaschine (1) gesteuert wird, wobei die Küchenmaschine (1) im Normalmodus betrieben wird, wenn der Nutzer anwesend ist, und wobei die Küchenmaschine (1) im Sicherheitsmodus betrieben wird, wenn der Nutzer nicht anwesend ist.

8. Verfahren nach einem der Ansprüche 5 bis 7, **dadurch gekennzeichnet, dass** die Küchenmaschine (1) erst dann im Sicherheitsmodus betrieben wird, wenn der Nutzer innerhalb einer bestimmten Zeitspanne nicht auf die Küchenmaschine (1) eingewirkt hat, wobei eine Nachricht über den bevorstehenden Betrieb der Küchenmaschine (1) im Sicherheitsmodus auf ein Datenkommunikationsgerät (4) des Nutzers gesendet wird.

9. Elektromotorisch betriebene Küchenmaschine (1) zum Zubereiten eines Zubereitungsgutes (2) anhand eines Rezeptes (2), insbesondere Zubereiten nach einem Verfahren gemäß einem der Ansprüche 1 bis 8, welche Küchenmaschine (1) einen Datenspeicher, eine Auswerte- und Steuereinrichtung und ein aufheizbares, zur Aufnahme eines Rührwerkes ausgebildetes Gefäß (3) aufweist, **dadurch gekennzeichnet, dass** die Küchenmaschine (1) ausgebildet ist, einen Betriebsparameter automatisch in Abhängigkeit von einem in dem Datenspeicher gespeicherten wiederholten gleichartigen Anwenderverhalten bei der Abarbeitung eines Rezeptes zu steuern, wobei das Anwenderverhalten einen Austausch von für ein Rezept vorgesehenen Zutaten durch andere Zutaten und/oder eine von einem Rezept abweichende Menge einer Zutat beinhaltet, wobei das Anwenderverhalten eine Vielzahl von Daten umfasst, wobei die Daten innerhalb des Datenspeichers hinterlegt sind, wobei die Auswerte- und Steuereinrichtung der Küchenmaschine (1) eingerichtet ist, die Vielzahl von in dem Datenspeicher gespeicherten Daten auszuwerten, dabei Wiederholungen des Anwenderverhaltens zu erkennen und die aktuellen Betriebsparameter der Küchenmaschine (1) analog zu den Betriebsparametern der früheren Zubereitungen zu steuern.

## Claims

1. A method for operating a food processor (1) driven by an electric motor for preparing a preparation item (2) based on a recipe, wherein the preparation item (2) is prepared in a vessel (3) of the food processor (1) in one or more sequential preparation steps, in particular via mixing and/or heating and/or comminuting, **characterized in that** an operating parameter of the food processor (1) is automatically controlled as a function of repeated user behavior of the same type when processing a recipe, wherein the user behavior includes an exchange of ingredients provided for a recipe by other ingredients and/or an amount of an ingredient that differs from a recipe, wherein the user behavior comprises a plurality of data, wherein the data are stored within a data memory, wherein an evaluation and control device of the food processor (1) evaluates the large number of data stored in the data memory, recognizes repetitions of user behavior and controls the current operating parameters of the food processor (1) analogously to the operating parameters of previous preparations.

2. The method according to claim 1, **characterized in that** the user behavior involves a weekday used for executing a recipe, a time and/or hour used for executing a recipe, the incorporation of a recipe into a menu and/or a repeated frequency of using the food processor (1) or the execution of a specific recipe or specific group of recipes.

3. The method according to one of the preceding claims, **characterized in that** the controlled operating parameter is a maintenance interval of the food processor (1).

4. The method according to one of the preceding claims, **characterized in that** the controlled parameter is a speed of the mixer of the food processor (1) and/or a temperature of a heater of the food processor (1).

5. The method according to one of the preceding claims, **characterized in that** the controlled parameter is safety mode and/or a normal mode for the food processor (1).

6. The method according to claim 5, **characterized in that** the safety mode involves a reduction in a speed of a mixer used when executing a recipe or in a temperature of a heater of the food processor (1) by comparison to the normal mode, or shutting down the mixer or heater of the food processor (1).

7. The method according to claim 5 or 6, **characterized in that** the choice between the safety mode and normal mode is controlled as a function of the presence of a user in the area of the food processor (1), wherein the food processor (1) is operated in the normal mode if the user is present, and wherein the food processor (1) is operated in the safety mode when the user is not present.

8. The method according to one of claims 5 to 7, **characterized in that** the food processor (1) is only operated in the safety mode if the user has not acted on the food processor (1) within a specific timeframe, wherein a message about the impending operation of the food processor (1) in the safety mode is sent out on a data communication device (4) of the user.

9. A food processor (1) driven by an electric motor for preparing a preparation item (2) based on a recipe (2), in particular preparing based on a method according to one of claims 1 to 8, which food processor (1) has a data memory, an evaluation and control device and a heatable vessel (3) designed to hold an agitator, **characterized in that** the food processor (1) is designed to automatically control, when processing a recipe, an operating parameter as a function of a repeated user behavior of the same type stored in the data memory, wherein the user behavior includes an exchange of ingredients provided for a recipe by other ingredients and/or an amount of an ingredient that differs from a recipe, wherein the data are stored within the data memory, wherein the evaluation and control device of the food processor (1) is designed to evaluate the large number of data stored in the data memory, to recognize repetitions of user behavior and to control the current operating parameters of the food processor (1) analogously to the operating parameters of previous preparations.

## Revendications

1. Procédé de fonctionnement d'un appareil de cuisine à moteur électrique (1) pour la préparation d'une préparation (2) sur la base d'une recette, dans lequel la préparation (2) est préparée dans un récipient (3) de l'appareil de cuisine (1) au moyen d'une ou de plusieurs étapes de préparation successives, en particulier en remuant et/ou en chauffant et/ou en hachant, **caractérisé en ce qu'**un paramètre de fonctionnement de l'appareil de cuisine (1) est commandé automatiquement en fonction d'un même comportement répété de l'utilisateur pendant l'exécution d'une recette, dans lequel le comportement de l'utilisateur comprend le remplacement d'ingrédients prévus pour une recette par d'autres ingrédients et/ou une quantité d'un ingrédient s'écartant d'une recette, dans lequel le comportement de l'utilisateur comprend une pluralité de données, les données étant stockées dans une mémoire de données, dans lequel un dispositif d'évaluation et de commande de l'appareil de cuisine (1) évalue la pluralité de données stockées dans la mémoire de données, reconnaît ce faisant des répétitions du comportement de l'utilisateur et commande les paramètres de fonctionnement actuels de l'appareil de cuisine (1) de manière analogue aux paramètres de fonctionnement des préparations antérieures.

2. Procédé selon la revendication 1, **caractérisé en ce que** le comportement de l'utilisateur comprend un jour de la semaine utilisé pour le traitement d'une recette, une heure de la journée et/ou un moment de la journée utilisé pour le traitement d'une recette, une inclusion d'une recette dans un menu et/ou une fréquence de répétition de l'utilisation de l'appareil de cuisine (1) ou de l'exécution d'une recette particulière ou d'un groupe particulier de recettes.

3. Procédé selon l'une des revendications précédentes, **caractérisé en ce que** le paramètre de fonctionnement commandé est un intervalle d'entretien de l'appareil de cuisine (1).

4. Procédé selon l'une quelconque des revendications précédentes, **caractérisé en ce que** le paramètre de fonctionnement commandé est une vitesse de rotation d'un agitateur de l'appareil de cuisine (1) et/ou une température d'un dispositif de chauffage de l'appareil de cuisine (1).

5. Procédé selon l'une des revendications précédentes, **caractérisé en ce que** le paramètre de fonctionnement commandé comprend un mode de sécurité et/ou un mode normal de l'appareil de cuisine (1).

6. Procédé selon la revendication 5, **caractérisé en ce que** le mode de sécurité comprend une réduction de la vitesse de rotation d'un agitateur ou de la température d'un dispositif de chauffage de l'appareil de cuisine (1) appliquée pendant l'exécution d'une recette par rapport au mode normal ou un arrêt de l'agitateur ou du dispositif de chauffage de l'appareil de cuisine (1).

7. Procédé selon la revendication 5 ou 6, **caractérisé en ce que** la sélection entre le mode de sécurité et le mode normal est commandée en fonction de la présence d'un utilisateur dans la zone de l'appareil de cuisine (1), l'appareil de cuisine (1) fonctionnant dans le mode normal lorsque l'utilisateur est présent et l'appareil de cuisine (1) fonctionnant dans le mode de sécurité lorsque l'utilisateur n'est pas présent.

8. Procédé selon l'une des revendications 5 à 7, **caractérisé en ce que** l'appareil de cuisine (1) est utilisé en mode de sécurité uniquement lorsque l'utilisateur n'a pas agi sur l'appareil de cuisine (1) pendant une certaine période de temps, un message concernant le fonctionnement imminent de l'appareil de cuisine (1) en mode de sécurité étant envoyé à un dispositif de communication de données (4) de l'utilisateur.

9. Appareil de cuisine à moteur électrique (1) pour la préparation d'une préparation (2) sur la base d'une recette (2), en particulier préparation selon un procédé selon l'une des revendications 1 à 8, lequel appareil de cuisine (1) comporte une mémoire de données, un dispositif d'évaluation et de commande et un récipient (3) pouvant être chauffé et conçu pour recevoir un agitateur, **caractérisé en ce que** l'appareil de cuisine (1) est conçu pour commander automatiquement un paramètre de fonctionnement pendant l'exécution d'une recette en fonction d'un même comportement répété de l'utilisateur qui est enregistré dans la mémoire de données, dans lequel le comportement de l'utilisateur comprend un remplacement des ingrédients prévus pour une recette par d'autres ingrédients et/ou une quantité d'un ingrédient s'écartant d'une recette, dans lequel le comportement de l'utilisateur comprend une pluralité de données, les données étant stockées dans la mémoire de données, dans lequel le dispositif d'évaluation et de commande de l'appareil de cuisine (1) est conçu pour évaluer la multiplicité de données enregistrées dans la mémoire de données pour reconnaître des répétitions du comportement de l'utilisateur et pour commander les paramètres de fonctionnement actuels de l'appareil de cuisine (1) d'une manière analogue aux paramètres de fonctionnement des préparations antérieures.
